# EUROPEAN PATENT APPLICATION

(11) **EP 4 542 973 A1**
(43) Date of publication of application: **23.04.2025**
(21) Application number: 24204313.1
(22) Date of filing: 02.10.2024
(51) Int. Cl.: H04L 69/22, H04L 43/028, H04L 43/04

(54) **SECURE FRAME CAPTURE**

(30) Priority: 17.10.2023 US 202318380864
(71) Applicant: VMware LLC, Palo Alto, CA 94304 (US)
(72) Inventor: Kirkovski, Seraphime, 1166 Sofia (BG); Ganchev, Stoycho, 1166 Sofia (BG); Stoyanov, Anton, 1166 Sofia (BG)
(74) Representative: Dilg, Haeusler, Schindelmann Patentanwaltsgesellschaft mbH

(57) **Abstract**

Some embodiments provide a method for performing secure frame capture for an application executing on a data compute node. At the application, the method receives and parses a frame for a particular L7 protocol. The method identifies an action to perform within the application based on the parsed frame. Based on secure frame capture being enabled for the application, the method writes information regarding the frame to a capture file stored at the DCN. The information regarding the frame omits (i) any L2-L4 information and (ii) any payload data carried by the frame.

## Description

### BACKGROUND

In a datacenter, especially multi-tenant datacenters, customers may be hesitant to allow packet capture on their machines due to security concerns. For HTTP/1 traffic, lightweight packet capture that captures data up to the layer 4 (L4) header was a solution that enabled an administrator to view useful troubleshooting data (L2-L4 address and port information, size of packet) while cutting off any payload data. However, HTTP/2 introduces a large amount of control traffic that appears as part of the same TCP stream as data traffic exchanged within that stream such that the same lightweight packet capture techniques do not work as well for HTTP/2 traffic. As such, new techniques are needed to securely capture troubleshooting information for HTTP/2 traffic.

### BRIEF SUMMARY

Some embodiments provide a method for secure frame capture (e.g., of HTTP/2 frame information). Rather than performing packet capture on a data compute node (DCN) such as a virtual machine (VM), container, etc. by listening on a device driver for entire network frames, some embodiments instead enable a hook within a specific application executing on the DCN to observe and write only HTTP information to a capture file stored by the DCN (e.g., on a disk or virtual disk associated with the DCN). The HTTP information written to the capture file identifies each frame as belonging to a particular connection while avoiding both (i) L2-L4 information and (ii) any payload data carried by the frame.

In typical operation, an application (e.g., a parser within an application) receives and parses an HTTP/2 frame after being provided the data from a networking stack of the DCN (that removes the lower layer protocol data such as L2-L4 headers). The parser then provides the parsed frame data to a protocol control module of the application that identifies an action (or set of actions) to perform based on the parsed frame data. These actions can include starting a new connection (or stream) between the application and, e.g., a client machine, dispatching payload data to a module of the application that processes that data, or taking a corrective action based on a control message indicating a specific type of error.

In some embodiments, when secure frame capture is enabled for the application, a hook is installed at this protocol control module that writes information regarding each received frame to a capture file (e.g., a pcap file). This information includes, for a given frame, a connection indicator specifying the connection to which the frame belongs as well as additional information about the type of frame (e.g., that the frame starts a new connection, that the frame is a data frame with a particular amount of payload data, that the frame is a control message indicating a specific HTTP/2 error). As noted, the information does not include either any L2-L4 information (which is removed at the networking stack outside of the application in some embodiments) or any payload data (to ensure this data is kept secure).

In some embodiments, in addition to writing information to the capture file for frames received by the application, the hook also writes information for frames sent by the application. In this case, the hook intercepts the frame data before that data is handed off to the networking stack to have the various L2-L4 headers appended and performs a similar write operation for the frame.

The capture file, in some embodiments, includes global header data specifying how a network analysis application (e.g., Wireshark) can parse the file. In some embodiments, capture files include an identifier indicating the L2 protocol used inside the file. Certain values are reserved for future use, and some embodiments use a specific one of these values to indicate that the frame information in the file will omit the L2-L4 information and only include HTTP/2 header information.

In addition, because the L2-L4 information is omitted, these headers cannot be used to specify the connection to which each frame belongs. As such, when a new connection begins, some embodiments write information to identify the connection into the capture file. Specifically, some embodiments use a predefined virtual frame type to define a new connection within the capture file, including a unique connection identifier. The unique connection identifier is then used in the information for each subsequent frame for the connection to identify that the frame belongs to the new connection.

In some embodiments, the hook that writes the frame capture information to the capture file is installed on a per-application basis on the DCN (as well as, potentially, other DCNs on the same host computer or on different host computers in the same datacenter). That is, an administrator (e.g., a network administrator, security administrator, etc.) for either the datacenter provider or the datacenter tenant can enable frame capture on certain applications executing on the DCN while disabling frame capture on other applications.

This administrator (or another administrator) can log into the DCN to access and analyze the capture file using, e.g., a network analysis tool such as Wireshark. The global header indicates to the network analysis tool the type of frame data to be found in the capture file and, in some embodiments, the network analysis tool is preconfigured to be able to parse such a capture file. Using the data from the capture file, the administrator can perform various types of troubleshooting operations to diagnose networking issues related to the application.

The preceding Summary is intended to serve as a brief introduction to some embodiments of the invention. It is not meant to be an introduction or overview of all inventive subject matter disclosed in this document. The Detailed Description that follows and the Drawings that are referred to in the Detailed Description will further describe the embodiments described in the Summary as well as other embodiments. Accordingly, to understand all the embodiments described by this document, a full review of the Summary, Detailed Description, and the Drawings is needed. Moreover, the claimed subject matters are not to be limited by the illustrative details in the Summary, Detailed Description, and the Drawings, but rather are to be defined by the appended claims, because the claimed subject matters can be embodied in other specific forms without departing from the spirit of the subject matters.

### BRIEF DESCRIPTION OF THE DRAWINGS

The novel features of the invention are set forth in the appended claims. However, for purpose of explanation, several embodiments of the invention are set forth in the following figures.
**Figure 1** conceptually illustrates the operation of an application on a data compute node to receive an HTTP/2 frame and securely store frame information in a capture file on the DCN.
**Figure 2** conceptually illustrates the operation of the application of **Figure 1** and a frame capture hook when the application sends a frame.
**Figure 3** conceptually illustrates an example of a secure frame capture file according to some embodiments.
**Figure 4** conceptually illustrates a data compute node on which multiple applications execute, with secure frame capture enabled on a subset of the applications.
**Figure 5** conceptually illustrates an administrator logging into a DCN to access a frame capture file stored at that DCN within a datacenter.
**Figure 6** conceptually illustrates an electronic system with which some embodiments of the invention are implemented.

### DETAILED DESCRIPTION

In the following detailed description of the invention, numerous details, examples, and embodiments of the invention are set forth and described. However, it will be clear and apparent to one skilled in the art that the invention is not limited to the embodiments set forth and that the invention may be practiced without some of the specific details and examples discussed.

Some embodiments provide a method for secure frame capture (e.g., of HTTP/2 frame information). Rather than performing packet capture on a data compute node (DCN) by listening on a device driver for entire network frames, some embodiments instead enable a hook within a specific application executing on the DCN to observe and write only HTTP information to a capture file stored by the DCN (e.g., on a disk or virtual disk associated with the DCN). The HTTP information written to the capture file identifies each frame as belonging to a particular connection while avoiding both (i) L2-L4 information and (ii) any payload data carried by the frame.

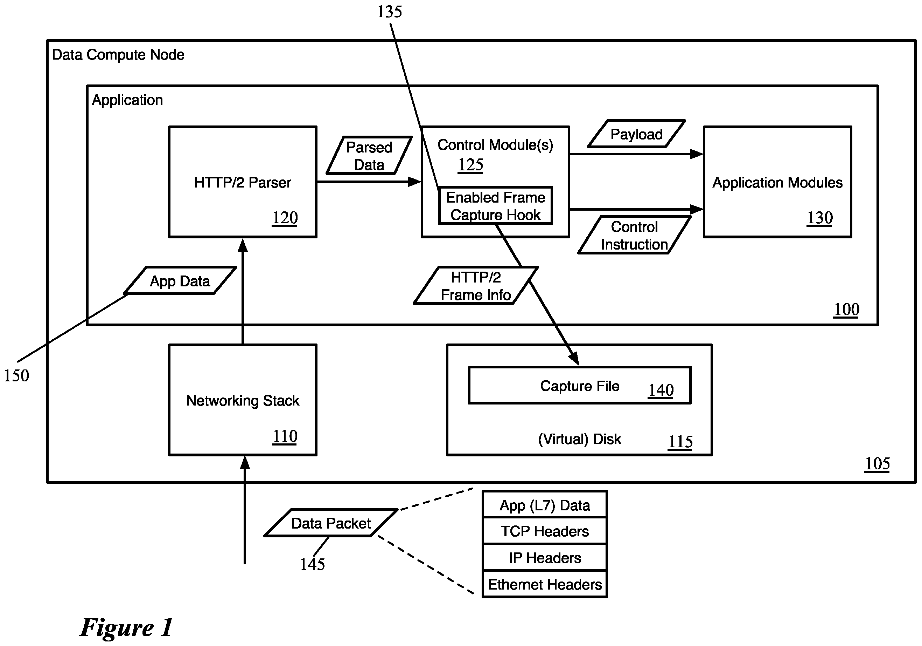

**Figure 1** conceptually illustrates the operation of an application 100 on a data compute node 105 to receive an HTTP/2 frame and securely store frame information in a capture file on the DCN. It should be understood that while the discussion herein refers to HTTP/2 frame capture, the principles described also apply to capture of information for other L7 protocols. For instance, HTTP/1 frame information could also be captured in this manner, but with fewer control messages.

The data compute node (DCN) 105 can be a virtual machine (VM), a container (e.g., a Docker container in a Kubernetes deployment), a bare metal computing device, etc. In some embodiments, the DCN executes on a host computer within a datacenter. As shown, the data compute node 105 includes a networking stack 110, at least one application 100, and a disk (e.g., a virtual disk) 115 that stores files used by the application 100 (as well as an operating system of the DCN, other applications, etc.).

The networking stack 110 is a TCP/IP stack, in some embodiments, that handles the L2-L4 processing for data and control traffic sent to and from various applications executing on the DCN 105. In some embodiments, the networking stack 110 is responsible for reading the L2-L4 headers of incoming traffic and providing data (e.g., higher layer data) carried by this traffic to the appropriate application (e.g., based on the L4 port number of the traffic) on the DCN 105. The networking stack 110 also adds the appropriate L2-L4 headers to traffic sent from the applications before this traffic is transmitted from the DCN to a network (e.g., a datacenter network).

The application 100 may be any type of application that receives and/or transmits data with other network endpoints (e.g., in the same logical network and/or datacenter, external endpoints such as client devices, etc.). For instance, the application 100 could be a web server application, a specialized application provided as a service through a cloud datacenter, etc. As shown, the application 100 includes an HTTP/2 parser 120, a set of control modules 125, and a set of application modules 130.

The HTTP/2 parser 120 handles the parsing of incoming HTTP/2 data from the networking stack 110 (i.e., application data from HTTP/2 frames after the L2-L4 information has been removed by the networking stack 110). While shown as an HTTP/2 parser, it should be understood that different L7 protocols will have different parsers executing within an application. In addition, while shown as a single parser 120, some embodiments instantiate a separate parser for each TCP connection with the application 100. In some embodiments, when HTTP/2 frame data is received, the parser 120 extracts information from the frame such as the header fields and values, the length of the frame, control message types, a uniform resource locator (URL) for HTTP requests, the body (payload) of the frame (e.g., for data frames), etc.

The control modules 125, in some embodiments are control callbacks that are part of the HTTP/2 (or other L7 protocol) processing for the application 100. In some embodiments, control modules for each type of HTTP/2 frame are part of the application 100, while other embodiments use a single control module for processing all types of frames. In some embodiments, the HTTP/2 parser 120 invokes the appropriate control module 125 depending on the type of frame received. The parser 120 provides the control module 125 with an indication as to the type of frame received and any additional information (e.g., payload data, control message parameters, etc.).

The control modules 125, in some embodiments, provide payload data to application modules 130. In some embodiments, at least a subset of control instructions are also sent from the control modules 125 to the application modules 130. In some embodiments, certain control instructions (e.g., error messages) are handled by the control module 125 while other instructions (e.g., starting a new connection or stream) are provided to the application modules 130. The application modules 130 perform the actual intended function of the application 100. For instance, for a web server, the application modules 130 serve web content in response to HTTP requests, among other functions.

At the control module(s) 125, some embodiments enable a frame capture hook 135 for performing frame capture. The hook 135 is installed at the control module(s) 125 (e.g., at each of the control modules) in some embodiments, or installed elsewhere in the frame processing pipeline in other embodiments (or in multiple locations within the application so as to ensure that both incoming and outgoing frame data is captured). The hook 135, may be enabled on some applications on the DCN 105 (i.e., on application 100) while being disabled (and thus either inactive or not installed) on other applications. The frame capture hook 135 writes information regarding each received HTTP/2 frame (or other L7 protocol message) to a capture file 140 (e.g., a pcap file). In some embodiments, this capture file 140 is stored on a disk 115 (e.g., a virtual disk) of the DCN 105.

For a given frame, the information written to the capture file 140 may include a connection indicator specifying the connection to which the frame belongs as well as additional information about the type of frame (e.g., that the frame starts a new connection, that the frame is a data frame with a particular amount of payload data, that the frame is a control message indicating a specific HTTP/2 error) in some embodiments. As noted, the information does not include either any L2-L4 information (which is removed at the networking stack 110) or any payload data (to ensure this data is kept secure).

**Figure 1** also illustrates the operation of the application 100 and frame capture hook 135 upon receipt of a frame. As shown, the networking stack 110 receives a data packet 145. This data packet 145 includes L2 headers for an Ethernet frame, L3 headers for an Internet Protocol (IP) packet, L4 headers for a Transmission Control Protocol (TCP) segment, and L7 headers and data for an HTTP/2 (or other L7 protocol) frame. The networking stack 10 may perform various networking operations while removing the L2-L4 headers and provides the HTTP/2 application layer (L7) data 150 to the parser 120.

The parser 120 parses this incoming application data 150 and provides parsed data to one of the control modules 125 (e.g., a particular control callback depending on the type of frame received). This parsed data may include the header fields and values from the frame, the length of the frame, control message types, a uniform resource locator (URL) for HTTP requests, the body (payload) of the frame (e.g., for data frames), etc. Based on this parsed data, the control module 125 identifies an action (or set of actions) to perform based on the parsed frame data. These actions can include starting a new connection (or stream) between the application and, e.g., a client machine, dispatching payload data to a module of the application that processes that data, or taking a corrective action based on a control message indicating a specific type of error. As shown, the control module 125 may pass payload data and/or a control instruction to one or more of the application modules 130.

When secure frame capture is enabled for the application 100, the frame capture hook 135 writes information regarding the received frame to the capture file 140 (e.g., a pcap file). The frame capture hook 135, in some embodiments, intercepts the parsed data, extracts the needed information, and writes this information to the capture file 140. In some embodiments, the frame capture hook 135 also performs certain data manipulation in writing information to the capture file 140 (e.g., identifying the correct connection to which the frame belongs so that a unique identifier can identify the connection within the frame capture file 140). The information that the frame capture hook 135 writes to the capture file 140 may include this connection indicator as well as additional information about the type of frame (e.g., that the frame starts a new connection, that the frame is a data frame with a particular amount of payload data, that the frame is a control message indicating a specific HTTP/2 error). As noted, the information does not include either any L2-L4 information (which is removed at the networking stack outside of the application in some embodiments) or any payload data (to ensure this data is kept secure).

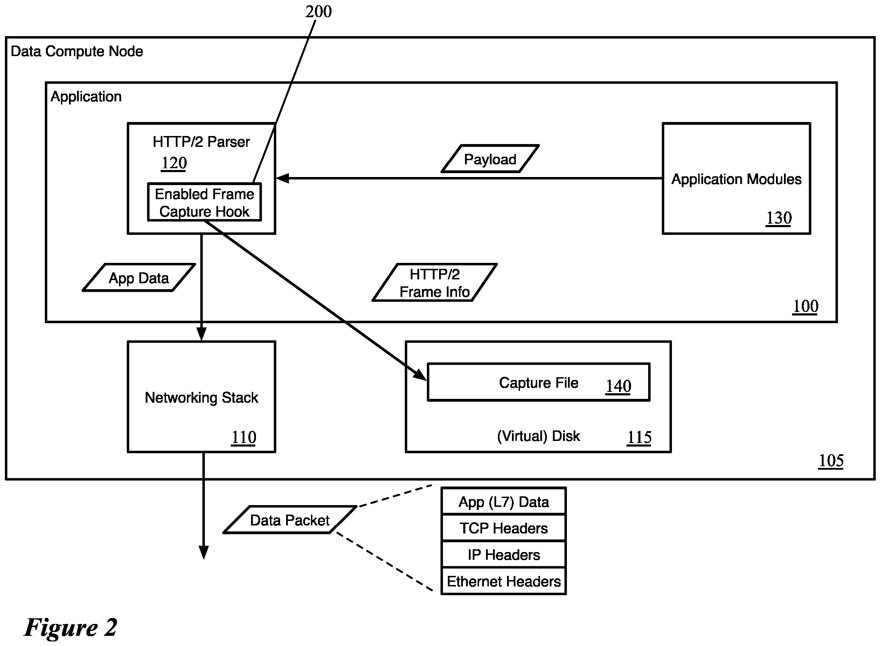

As indicated, in addition to writing information to the capture file for frames received by the application, the frame capture hook 135 also writes information for frames sent by the application (e.g., HTTP responses). **Figure 2** conceptually illustrates the operation of the application 100 and a frame capture hook 200 when the application 100 sends a frame. In some embodiments, the frame capture hook 200 is a different hook (or the same function but called from a different pipeline) than the hook 135. In this case, the frame capture hook 200 is configured to intercept data at the parser 120 (e.g., prior to the parser composing HTTP/2 headers). In other embodiments, different modules (i.e., an HTTP/2 composer rather than the parser) is involved in generating the HTTP/2 data and the frame capture hook 200 intercepts data at these modules.

In either case, the application modules 130 provide payload data to the parser 120. The parser 120 identifies that the payload data relates to a particular connection (e.g., based on information provided with the payload data or by another module relating to the composition of HTTP/2 frames) and generates application data to hand off to the networking stack 110. Here, the frame capture hook 200 writes information regarding the frame to the capture file 140. In some embodiments, this is the same information as is written for incoming frames. The data written to the file indicates the connection to which the frame belongs as well as that the frame is a data frame and the amount of payload data (for data frames). The networking stack 110 composes an Ethernet frame by adding the appropriate TCP, IP, and Ethernet headers for the connection, then sends that Ethernet frame from the DCN 105 onto the network (e.g., to a host computer virtual switch).

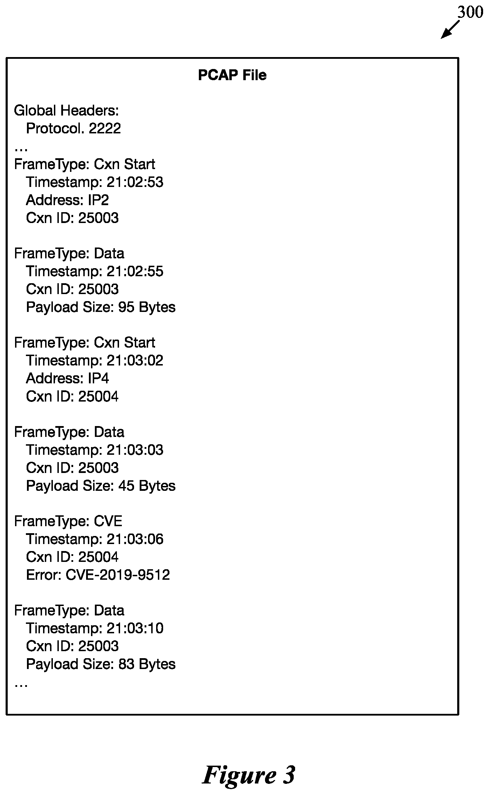

**Figure 3** conceptually illustrates an example of a secure frame capture file 300 according to some embodiments. In this case, the frame capture file 300 is a pcap file, though other embodiments may use different formats, this frame capture file 300 is a file readable by certain network analysis applications (e.g., Wireshark). As shown, the frame capture file 300 begins with a set of global headers that specify how such an analysis application should parse the file. Certain capture files often include an identifier to indicate the L2 protocol that is used for the messages (packets, frames, etc.) for which information is stored in the file, which is used to properly parse these messages. Certain values are reserved (i.e., for future use), so some embodiments use a specific one of these values (2222 in this case) to indicate that the frame information in the file omits L2-L4 headers and only includes HTTP/2 header information. The frame capture files of some embodiments may also include additional global headers not shown in this figure.

The frame capture file 300 then includes information for various frames. In some embodiments, because the L2-L4 information is omitted from the frame information, these L2-L4 headers cannot be used to specify the connection to which each frame belongs. As such, when a new connection begins, some embodiments write information to identify the connection into the capture file 300. Specifically, some embodiments use a predefined virtual frame type to define a new connection within the capture file, including a unique connection identifier. The first set of frame information in the capture file 300 is an example of such a virtual frame type. As shown, the frame information specifies the frame type (connection start) as well as a timestamp, IP address, and connection identifier. The timestamp for this virtual frame specifies the time at which the connection begins, and the IP address included in some embodiments is the IP address (which is included in the L7 data provided to the application, in some embodiments, for instance to enable the application to respond to the correct request). The connection identifier (25003) is a unique number (within the capture file) generated by the frame capture hook, in some embodiments, to identify this connection in the information written to the capture file 300 for each subsequent frame for the connection to identify that the frame belongs to the new connection.

Subsequent pieces of frame information in the capture file 300 use this connection identifier. For instance, the next set of frame information written to the capture file is for a data frame. This frame information specifies the timestamp of the received data frame as well as the connection identifier (defined in the connection start frame information) and the payload size. The capture file 300 also includes information for the start of another connection (using identifier 25004) as well as data frames for both of these connections. Further, the capture file 300 includes information for an error message (a type of control message) that the application receives related to the second connection. The error message information specifies the timestamp, connection identifier, and the type of error (CVE-2019-9512, indicating a Ping Flood). It should be noted that, in some embodiments, the frame information written to the capture file also specifies a direction (outgoing or incoming) for each of the frames.

In some embodiments, the hook (or hooks) that writes the frame capture information to the capture file is installed on a per-application basis on the DCN (as well as, potentially, other DCNs on the same host computer or on different host computers in the same datacenter). That is, an administrator (e.g., a network administrator, security administrator, etc.) for either the datacenter provider or the datacenter tenant can enable frame capture on certain applications executing on the DCN while disabling frame capture on other applications.

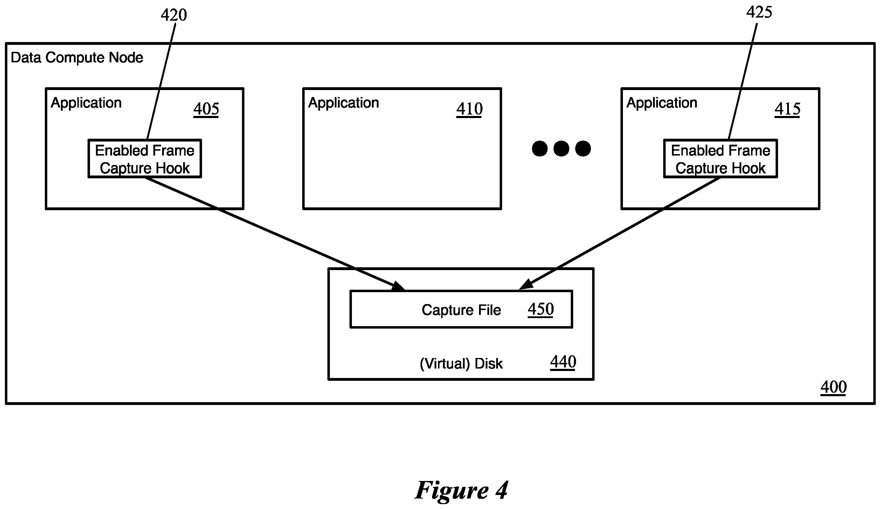

**Figure 4** conceptually illustrates a data compute node 400 on which multiple applications 405-415 execute. On a first application 405, secure frame capture is enabled and thus a frame capture hook 420 writes frame capture information to a capture file 450 stored on a disk (e.g., a virtual disk) 440 of the DCN 400. On a second application 410, secure frame capture is disabled, so no frame capture hook is installed within the application 410. On a third application 415, the secure frame capture hook is enabled and thus a frame capture hook 425 writes frame capture information for that application 415 to the capture file 450. In this case, the frame capture hooks on all of the applications for which secure frame capture is enabled write to the same capture file 450. In other embodiments, however, the frame capture hook for each application for which secure frame capture is enabled write to different capture files stored by the DCN. In some embodiments, using separate frame capture files avoids the difficulties of having multiple different processes in different applications attempting to write to the same file (sometimes simultaneously or nearly simultaneously).

The administrator that enables the secure frame capture (or another administrator) can log into the DCN to access and analyze the capture file using, e.g., a network analysis tool such as Wireshark. In some embodiments, the DCN is one of multiple DCNs executing on a host computer in a datacenter with numerous host computers.

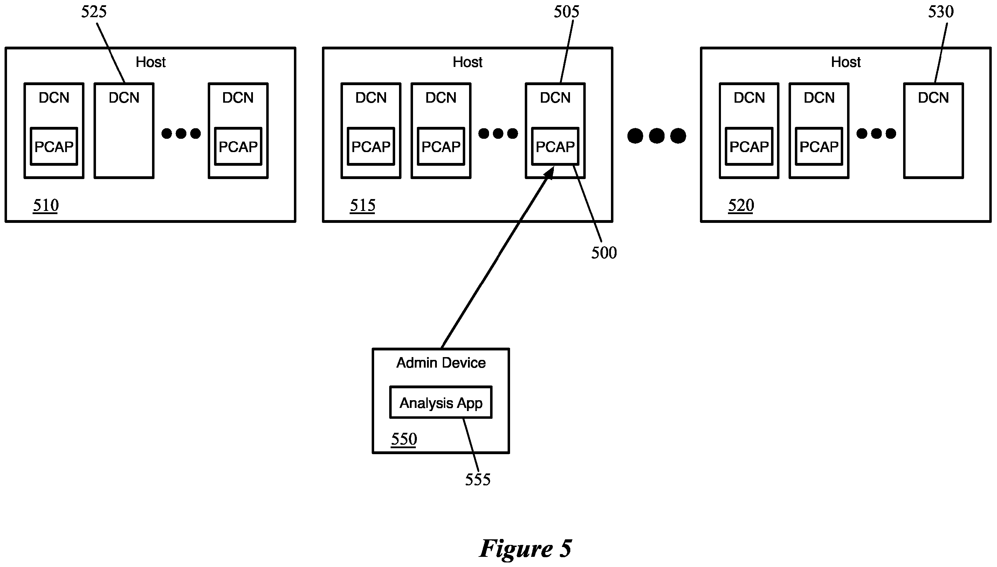

**Figure 5** conceptually illustrates an administrator logging into a DCN 505 to access a frame capture file 500 stored at that DCN within a datacenter. As shown, the datacenter includes numerous host computers 510-520 on which various DCNs execute. Secure frame capture is enabled for at least one application on many of these DCNs (though not DCN 525 or DCN 530) and thus the DCNs store frame capture files.

A network administrator device 550 (e.g., a computing device used by the network administrator, which may be a laptop, mobile device, desktop computer, etc.) runs a network analysis application 555 (e.g., Wireshark or a similar tool). In some embodiments, the network analysis application 555 is installed on the DCN 505 when the administrator logs into that device, rather than running on the admin device 550. The analysis application 555 is preconfigured to be able to parse a secure frame capture file based on the global header indicating the type of frame data to be found in the capture file (i.e., the absence of L2-L4 headers). The administrator uses the analysis application 555 to parse the capture file 500 and provide information about the types of HTTP/2 (or other L7 protocol) frames processed by one or more applications on the DCN 505. Using this information, the administrator can perform various types of troubleshooting operations to diagnose networking issues related to the application.

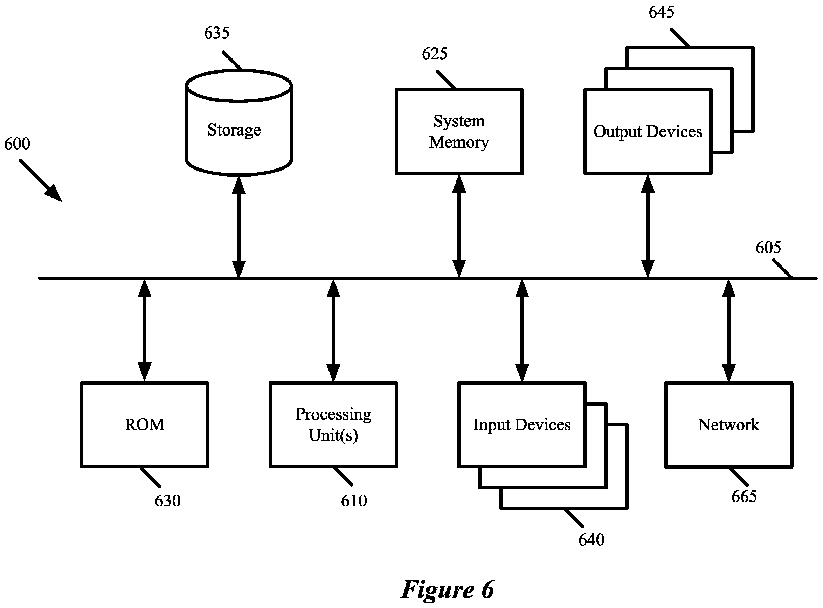

**Figure 6** conceptually illustrates an electronic system 600 with which some embodiments of the invention are implemented. The electronic system 600 may be a computer (e.g., a desktop computer, personal computer, tablet computer, server computer, mainframe, a blade computer etc.), phone, PDA, or any other sort of electronic device. Such an electronic system includes various types of computer readable media and interfaces for various other types of computer readable media. Electronic system 600 includes a bus 605, processing unit(s) 610, a system memory 625, a read-only memory 630, a permanent storage device 635, input devices 640, and output devices 645.

The bus 605 collectively represents all system, peripheral, and chipset buses that communicatively connect the numerous internal devices of the electronic system 600. For instance, the bus 605 communicatively connects the processing unit(s) 610 with the read-only memory 630, the system memory 625, and the permanent storage device 635.

From these various memory units, the processing unit(s) 610 retrieve instructions to execute and data to process in order to execute the processes of the invention. The processing unit(s) may be a single processor or a multi-core processor in different embodiments.

The read-only-memory (ROM) 630 stores static data and instructions that are needed by the processing unit(s) 610 and other modules of the electronic system. The permanent storage device 635, on the other hand, is a read-and-write memory device. This device is a nonvolatile memory unit that stores instructions and data even when the electronic system 600 is off. Some embodiments of the invention use a mass-storage device (such as a magnetic or optical disk and its corresponding disk drive) as the permanent storage device 635.

Other embodiments use a removable storage device (such as a floppy disk, flash drive, etc.) as the permanent storage device. Like the permanent storage device 635, the system memory 625 is a read-and-write memory device. However, unlike storage device 635, the system memory is a volatile read-and-write memory, such a random-access memory. The system memory stores some of the instructions and data that the processor needs at runtime. In some embodiments, the invention's processes are stored in the system memory 625, the permanent storage device 635, and/or the read-only memory 630. From these various memory units, the processing unit(s) 610 retrieve instructions to execute and data to process in order to execute the processes of some embodiments.

The bus 605 also connects to the input and output devices 640 and 645. The input devices enable the user to communicate information and select commands to the electronic system. The input devices 640 include alphanumeric keyboards and pointing devices (also called "cursor control devices"). The output devices 645 display images generated by the electronic system. The output devices include printers and display devices, such as cathode ray tubes (CRT) or liquid crystal displays (LCD). Some embodiments include devices such as a touchscreen that function as both input and output devices.

Finally, as shown in **Figure 6****,** bus 605 also couples electronic system 600 to a network 665 through a network adapter (not shown). In this manner, the computer can be a part of a network of computers (such as a local area network ("LAN"), a wide area network ("WAN"), or an Intranet, or a network of networks, such as the Internet. Any or all components of electronic system 600 may be used in conjunction with the invention.

Some embodiments include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra-density optical discs, any other optical or magnetic media, and floppy disks. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some embodiments are performed by one or more integrated circuits, such as application specific integrated circuits (ASICs) or field programmable gate arrays (FPGAs). In some embodiments, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms display or displaying means displaying on an electronic device. As used in this specification, the terms "computer readable medium," "computer readable media," and "machine readable medium" are entirely restricted to tangible, physical objects that store information in a form that is readable by a computer. These terms exclude any wireless signals, wired download signals, and any other ephemeral signals.

This specification refers throughout to computational and network environments that include virtual machines (VMs). However, virtual machines are merely one example of data compute nodes (DCNs) or data compute end nodes, also referred to as addressable nodes. DCNs may include non-virtualized physical hosts, virtual machines, containers that run on top of a host operating system without the need for a hypervisor or separate operating system, and hypervisor kernel network interface modules.

VMs, in some embodiments, operate with their own guest operating systems on a host using resources of the host virtualized by virtualization software (e.g., a hypervisor, virtual machine monitor, etc.). The tenant (i.e., the owner of the VM) can choose which applications to operate on top of the guest operating system. Some containers, on the other hand, are constructs that run on top of a host operating system without the need for a hypervisor or separate guest operating system. In some embodiments, the host operating system uses name spaces to isolate the containers from each other and therefore provides operating-system level segregation of the different groups of applications that operate within different containers. This segregation is akin to the VM segregation that is offered in hypervisor-virtualized environments that virtualize system hardware, and thus can be viewed as a form of virtualization that isolates different groups of applications that operate in different containers. Such containers are more lightweight than VMs.

Hypervisor kernel network interface modules, in some embodiments, is a non-VM DCN that includes a network stack with a hypervisor kernel network interface and receive/transmit threads. One example of a hypervisor kernel network interface module is the vmknic module that is part of the ESXi^{™} hypervisor of VMware, Inc.

It should be understood that while the specification refers to VMs, the examples given could be any type of DCNs, including physical hosts, VMs, non-VM containers, and hypervisor kernel network interface modules. In fact, the example networks could include combinations of different types of DCNs in some embodiments.

While the invention has been described with reference to numerous specific details, one of ordinary skill in the art will recognize that the invention can be embodied in other specific forms without departing from the spirit of the invention. In addition, a number of the figures conceptually illustrate processes. The specific operations of these processes may not be performed in the exact order shown and described. The specific operations may not be performed in one continuous series of operations, and different specific operations may be performed in different embodiments. Furthermore, the process could be implemented using several sub-processes, or as part of a larger macro process. Thus, one of ordinary skill in the art would understand that the invention is not to be limited by the foregoing illustrative details, but rather is to be defined by the appended claims.

## Claims

1. A method for performing secure frame capture for an application executing on a data compute node (DCN):
at the application:
receiving and parsing a frame for a particular layer 7 (L7) protocol;
identifying an action to perform within the application based on the parsed frame; and
based on secure frame capture being enabled for the application, writing information regarding the frame to a capture file stored at the DCN, said information regarding the frame omitting (i) any L2-L4 information and (ii) any payload data carried by the frame.

2. The method of claim 1, wherein
information is written to the capture file by a hook that is enabled within the application based on secure frame capture being enabled for the application.

3. The method of claim 2, wherein
the hook is enabled on a per-application basis within the DCN such that the hook is enabled to perform secure frame capture for at least one additional application executing on the DCN and is disabled for at least one application executing on the DCN.

4. The method of any one of the claims 1 to 3, wherein
the particular L7 protocol is HTTP/2.

5. The method of any one of the claims 1 to 4, wherein
the capture file is a pcap file.

6. The method of any one of the claims 1 to 5, wherein:
the identified action comprises dispatching payload data to the application; and
the information written to the capture file regarding the frame indicates that a data frame was received for a particular connection but does not include the payload data.

7. The method of claim 6, wherein
the information comprises a size of the payload data.

8. The method of any one of the claims 1 to 7, wherein:
the frame is a control message indicating a protocol error; and
the information written to the capture file regarding the frame specifies (i) a connection indicator for the frame and (ii) the protocol error.

9. The method of any one of the claims 1 to 8, wherein:
the identified action comprises starting a new connection for the application; and
the information written to the capture file specifies the start of a new connection and defines a new identifier for the new connection.

10. The method of claim 9, wherein
the new identifier is used to identify the connection for information regarding subsequent frames written to the capture file without requiring any L2-L4 information for the connection.

11. The method of any one of the claims 1 to 10, wherein
the frame is a first frame, the method further comprising, at the application:
identifying a second frame to be sent from the application; and
writing information regarding the second frame to the capture file.

12. The method of any one of the claims 1 to 11, wherein
an administrator logs into the DCN to analyze the capture file using a network analysis tool.

13. The method of claim 12, wherein
the capture file comprises a global header specifying that the frame information was captured using a particular secure format without L2-L4 data, thereby enabling the network analysis tool to parse the capture file.

14. The method of claim 12 or 13, wherein
the DCN is a virtual machine executing on a host computer within a datacenter network.

15. A non-transitory machine-readable medium storing an application which when executed by at least one processing unit performs secure frame capture, the application executing within a data compute node (DCN), the program comprising sets of instructions for controlling and/or carrying out a method as set forth in any one of the preceding claims.
